(19) Europäisches Patentamt / European Patent Office / Office européen des brevets

(11) **EP 2 317 729 A1**

(12) **EUROPEAN PATENT APPLICATION**

(43) Date of publication:
**04.05.2011 Bulletin 2011/18**

(51) Int Cl.:
***H04L 29/08*** *(2006.01)*

(21) Application number: **09174329.4**

(22) Date of filing: **28.10.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Nederlandse Organisatie voor Toegepast -Natuurwetenschappelijk Onderzoek TNO 2628 VK Delft (NL)**

(72) Inventors:
- **Klos, Victor Bastiaan**
  **2498 BV Den Haag (NL)**
- **van Deventer, Mattijs Oskar**
  **2264 DL Leidschendam (NL)**
- **Laarakkers, Jeroen**
  **2631 WK Nootdorp (NL)**

(74) Representative: **Hatzmann, Martin Vereenigde Johan de Wittlaan 7 2517 JR Den Haag (NL)**

(54) **Servers for device identification services**

(57)    A system (40) for identifying proximate devices (1, 2) comprises at least one correlation server (5) for correlating data received from the devices so as to match two or more of the devices and at least one application server (6) for carrying out an application involving matched devices. The at least one correlation server (5) and the at least one application server (6) are distinct servers so as to provide a greater flexibility and scalability. The devices (1, 2) may be mobile consumer devices.

FIG. 6

**Description**

The present invention relates to servers for device identifications. More in particular, the present invention relates to a system for identifying proximate devices, such as proximate mobile devices, the system comprising at least one correlation server μfor correlating sets of identifications received from the devices, and at least one application server for carrying out an application in response to a correlated identification.

Mobile devices, such as mobile (cellular) telephones, PDAs (Personal Digital Assistants), laptop computers, and (portable) gaming consoles increasingly have multiple functions. Modem mobile telephones, for example, are not only suitable for making telephone calls but often also include a calculator, a calendar, and even games. Mobile phone games are typically designed for a single player, involving only the mobile device they are played on. However, some types of games require multiple players, each player using his/her own device. Before a multiple player game can begin, the players have to be selected and, accordingly, their mobile devices have to be identified.

It is possible to identify other mobile devices using a stored phone list containing the telephone numbers of other mobile devices and the respective names of their owners. However, the phone list contains no information regarding the availability and proximity of the other mobile devices. If a multiple player game is to be played with a group of players who are located in each other's vicinity, for example within viewing distance, the mobile devices of that group have to be identified in another way. Of course it is possible to manually enter the telephone numbers of participating mobile devices, if these numbers are known. However, this is cumbersome and prone to errors, in particular when the telephone numbers have to be read aloud. Accordingly, there is a need for a simple yet effective identification mechanism for mobile devices located in each other's vicinity.

Such an identification mechanism can also be used in mobile devices other than mobile telephones, for example in PDAs, laptop computers and so-called notebook computers. An identification mechanism may not only be used in gaming applications, as PDAs and similar devices may in general need to identify other devices in order to initiate a transaction between the devices. An example of a transaction is exchanging information, such as data files, calendar appointments, and other information.

The identification mechanism would primarily be used for (mobile or non-mobile) devices which are located in each other's vicinity, as remote devices would not likely be involved in a multiple player game or data exchange. In particular, it is often desired to invite (the owner of) a device to join a game or to exchange calendar data when (the owner of) the device is in view. For the invited device to join the game or exchange data, it first has to be identified. Accordingly, there is a need to automatically identify proximate devices and to subsequently activate a service, such as a game, involving the identified proximate devices.

International Patent Application WO2009/ 014438 (TNO / KPN) discloses a method of identifying proximate mobile devices by using sensory identifiers. A detected sensory identifier, such as a particular sound or image, may be verified in a server. Such a server identification makes it unnecessary for the mobile devices to contain verification software and/or hardware, thus keeping the mobile devices relatively simple and hence inexpensive. However, the mutual identification resulting from this known method is typically used to initiate a game, transaction or other activity. This further activity requires suitable software running on a server. The obvious choice for the server for carrying out the further activity (game, transaction) resulting from the identification would be the server used for the identification process. If several different further activities could result from the identification, several servers could be used, each server providing both the identification and the resulting activity. This would, however, require multiple instances of the identification process. In addition, each server would have to have the resources (memory, processing capacity) to run both the identification and the activity applications, thus making the servers relatively expensive.

It is an object of the present invention to overcome these and other problems of the Prior Art and to provide a system and method for processing identifications of devices, which system and method use servers having a reduced complexity.

Accordingly, the present invention provides a system for identifying proximate devices arranged for detecting a sensory identifier and transmitting request messages comprising representations of the detected sensory identifier, the system comprising:

- at least one correlation server for correlating representations received from the devices so as to match two or more of those devices, and
- at least one application server for carrying out an application involving matching devices,
  wherein the at least one correlation server and the at least one application server are distinct servers.

By providing distinct servers, that is an identification server and a distinct application server, both servers can be dedicated to their respective tasks and can be relatively simple. More importantly, if more than one identification server and/or more than one application server are used, a single (separate) identification server can be used together with multiple (separate) application servers, or multiple (separate) identification servers can be used with a single (separate) application server or with multiple (separate) application servers. Accordingly, the invention provides increased flexibility and efficiency.

The correlation server determines whether the (sensory) identifiers received from the devices match, in other words, whether their representations of the identifier (and possibly other data) are correlated. In addition, the correlation server provides the identifications of the matching devices. The application server uses the identifications of the matching devices for carrying out an application, such as a game or a service involving the devices.

The devices of which the identities have to be determined when the devices are proximate are arranged for detecting a sensory identifier and transmitting request messages comprising representations of the detected sensory identifier. That is, the devices are capable of detecting the sensory identifier, which may for example be a sound or image, produce a representation of the sensory identifier, and send the representation, together with any other data, to the correlation server(s) using a request message which serves to request a match.

It will be understood that the term "identifying", in this context, is meant to include the process of establishing the identity of a (mobile or stationary) device or its user by matching at least one identifier detected by the device with at least one identifier detected by another device, these identifiers preferably being identical or at least similar. The acknowledgement messages which are sent to the devices when a match has been made may contain an identification of the other device(s) to allow the matched (and therefore proximate) devices to identify each other.

It will further be understood that the term "sensory identifier", in this context, is meant to include identifiers which can be detected by the (human) senses, such as sounds (audio identifiers), images (visual identifiers) and smells (olfactory identifiers). In addition to sensory identifiers, other identifiers may be used, such as location identifiers (determined by, for example, GPS or GSM technology).

The identifiers may include event fingerprints which represent an event. Events that may be represented by an identifier are the production of a sound (clapping hands, two client devices touching), the production an image (symbol, bar code, movement), or pressing a button. Event fingerprints comprise data relating to the event, which data can be said to provide an identification of the event.

In a first embodiment, the at least one application server is arranged for communicating with the devices through the correlation server. In this embodiment, there is no direct communication between the application server and the client devices.

In a second embodiment, the at least one application server is arranged for communicating with the client devices directly, so not through the correlation server. In this embodiment, the client devices communicate with both the correlation server and the application server.

In a third embodiment, the at least one application server is arranged for communicating directly with both the correlation server and with the client devices. In this embodiment, the communication between the application server and the client devices will take place directly, and the communication between the application server and the correlation server, mainly to receive the identifications of the matching devices, also takes place directly.

According to a further aspect of the present invention, the request messages may further comprise environmental information from the devices, such as temperature, air pressure, scent and/or location, and the correlation server may be arranged for correlating the environmental information in addition to the representations. In such embodiments, the devices produce additional information indicative of their surroundings. This additional information may assist the correlation server when matching devices and increases the reliability of those matches.

As stated above, the sensory identifier may comprise a sound, preferably a sound produced by tapping the devices together. This allows a quick and easy identification of devices by tapping them together.

It is preferred that the devices are mobile devices, such as mobile telephone devices, but at least one of the devices may not be mobile.

In a further embodiment, the system according to the present invention comprises at least two correlation servers and further comprises at least one proxy server for routing messages from the devices to at least one correlation server. In such an embodiment, the proxy servers may re-route acknowledgement messages from a correlation server or application server to the client devices.

The present invention also provides a server for use in the system defined above, preferably a correlation server which is devoid of application server functionality.

The devices used in conjunction with the system of the present invention are preferably mobile or portable devices, that is, devices such as mobile telephone devices which can be carried by a user. However, the present invention is not so limited and at least one of the devices may be a non-mobile, that is, fixed device, such as a cash register, which is not designed to be carried by a used but is instead designed to be used in a fixed location.

Applications used in the system of the present invention may involve games, (financial) transactions, data exchanges, music, video, etc..

The present invention also provides a method of identifying proximate devices arranged for detecting a sensory identifier and transmitting request messages comprising representations of the detected sensory identifier, the method comprising the steps of:

- at least one correlation server correlating representations received from the devices so as to match two or more of those devices, and

• at least one application server carrying out an application involving matching devices,

wherein the at least one correlation server and the at least one application server are distinct servers.

Advantageously, the step of correlating may take previous matches into account. That is, the correlation server may use its history to facilitate the matching process and to improve the accuracy of the matches.

The devices may be mobile devices, such as mobile telephone devices, while the applications may be games, financial transactions, data exchanges and other transactions involving the mobile devices. The applications are facilitated by suitable software program products that are used by the application server.

The present invention additionally provides a computer program product for carrying out the method as defined above. A computer program product may comprise a set of computer executable instructions stored on a data carrier, such as a CD or a DVD. The set of computer executable instructions, which allow a programmable computer to carry out the method as defined above, may also be available for downloading from a remote server, for example via the Internet.

The present invention will further be explained below with reference to exemplary embodiments illustrated in the accompanying drawings, in which:

Fig. 1 schematically shows exemplary embodiments of devices and a sensory identifier as may be used in the present invention.
Fig. 2 schematically shows the back of an exemplary embodiment of a device as shown in Fig. 1.
Fig. 3 schematically shows an arrangement of client devices and a combined server according to the Prior Art.
Fig. 4a schematically shows a first arrangement of client devices and distinct servers according to the present invention.
Fig. 4b schematically shows a second arrangement of client devices and distinct servers according to the present invention.
Fig. 5 schematically shows an exchange of messages using only a single, combined server as in the Prior Art.
Fig. 6 schematically shows an exchange of messages using two distinct servers according to the present invention.
Fig. 7 schematically shows a protocol data model according to the present invention.

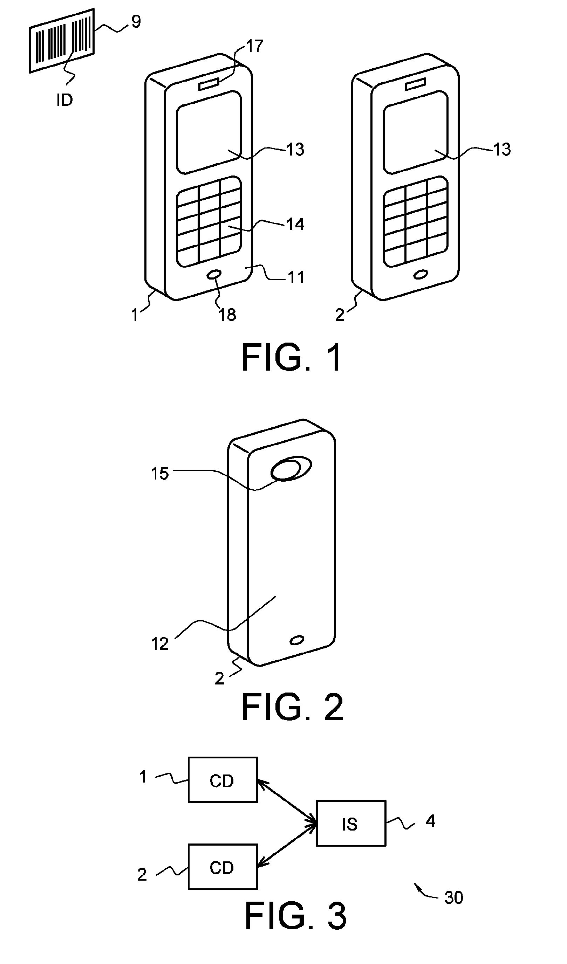

The set of devices shown merely by way of non-limiting example in Fig. 1 comprises a first device 1 and a second device 2, which may be referred to as client devices. In the example shown, the client devices are mobile (that is, portable) telephone devices arranged for mobile (that is, cellular) telephone services which may, however, also incorporate other functions, such as PDA (Personal Digital Assistant) functions.

Each mobile device 1, 2 has a front face 11 on which a display screen 13, a keypad 14, a loudspeaker 17 and a microphone 18 are arranged. It will be understood that the loudspeaker and/or the microphone may alternatively be arranged on a side face of the device. As shown in Fig. 2, each mobile device may have a bar code scanner or camera 15 arranged at its rear face 12.

The mobile devices 1, 2 are capable of detecting a sensory identifier. The merely exemplary sensory identifier ID shown in Fig. 1 is constituted by a bar code. This bar code may be "read" by a bar code scanner or a camera of a mobile device, as shown in Fig. 2.

A visual sensory identifier, such as a bar code or a symbol, may be applied on a sticker or label 9. Instead of a stationary spatial pattern, such as the regular bar code shown in Fig. 1, a temporal pattern may be used, such as a blinking pattern or symbol of which the frequency and/or time intervals contain the identifying information. Accordingly, the visual identifier may be constituted by a spatial and/or temporal pattern, for example produced by a display (such as an advertising display in a shop or shop window) or a light.

The sensory identifier may alternatively, or additionally, comprise an audio identifier, such as a sound signal. The audio identifier may be rendered by a loudspeaker of a device, or may be produced by a percussive element external to the device, such as a drum or a tuning fork. Alternatively, or additionally, the audio identifier may be produced by clapping hands or by tapping the (mobile) devices together. The sensory identifier may be accompanied by a time stamp. This allows sensory identifiers from multiple sources to be distinguished.

As stated above, an audio identifier may be produced by tapping the (mobile) devices 1 and 2 together. The tapping sound is received by the microphones 18 of both mobile devices. The audio identifier may alternatively be constituted by a sound signal produced by a loudspeaker (e.g. a loudspeaker 17 of the mobile devices shown in Fig. 1), the sound signal preferably consisting of multiple tones and/or pulses so as to be able to distinguish a plurality of different identifiers and/or time stamps.

Alternatively, or additionally, scent identifiers and/or touch identifiers may be used. The devices may, in such embodiments, be capable of detecting smells which are also detected by another device, or may be capable of sensing the surface of another object or device, the sensed surface containing touch identifiers, for example Braille symbols. Movement detectors for detecting (common) movements of the (mobile) devices may also be used. The present invention is therefore not limited to audio or visual identifiers.

The sensory identifiers, in the example of Figs. 1 and 2 visual identifiers, serve to identify the devices when they are located in each other's proximity. The method of identifying serves to determine the identity of the other device, which identity may subsequently be used for exchanging information and/or playing games. More in particular, the method of identifying according to the present invention may comprise several steps, including the steps of a device detecting a sensory identifier (such as a bar code or an audio signal) and sending a request message associated with the sensory identifier to a server common to the devices. It is further possible to verify the detected identifier by comparing (a representation of) the identifier with a predetermined format, range or similar measure. Pattern recognition techniques may be used to match the detected identifier with a stored identifier format and/or to recognize the detected identifier.

Different arrangements of the devices 1 & 2 and any servers are possible. In the following description, the (mobile or non-mobile) devices will be referred to as client devices because of their role with respect to the servers.

The Prior Art system 30 shown in Fig. 3 comprises a first client device (CD) 1, a second client device 2 and a single server 4. The server 4 combines the functions of a correlation server and an application server and is therefore referred to as integrated server (IS). Its correlation function correlates information received from the client devices in order to find any matches, while its application function provides applications, such as payment services, game services or other services and activities, in response to matches.

The correlation (server) function is designed to find matches between devices by correlating data received from those devices. The term "correlation" refers to establishing the correspondence between the concerned, that is, determining whether the received data are related by means of comparison or other methods. Thus it can be determined, for example, whether the received data are related to the same event, such as the detection of a sound or symbol by the client devices. The data received from the devices preferably comprise the representations of identifiers, in particular sensory identifiers. In other words, the correlation function determines whether (sensory or non-sensory) identifiers and any other relevant data received from the client devices match. Explicit reference is made to International Patent Application WO 2009/014438, in which techniques are disclosed for identifying proximate devices, such as mobile telephone devices, using sensory identifiers.

The application (server) function is arranged for running an application, that is, application software suitable for carrying out a specific game or other function, such as the exchange of telephone numbers or generating a common tune.

In Prior Art systems, as shown in Fig. 3, the correlation function and the application function are combined in a single server unit, for example by providing two sets of software programs (correlation and application software programs) which are executed by the same server unit. This arrangement works well when only a single server is used, but is inefficient when it is scaled. To support multiple applications, the Prior Art arrangement would use multiple combined servers, each having a correlation function and an application function. It has been found that such an arrangement is not efficient, as it involves duplication of the correlation function, thus unnecessarily claiming server resources. Alternatively, (part of) the application software may be executed by the client devices, which may also lead to an undesired duplication of software and functions and an undesired claiming of client device resources.

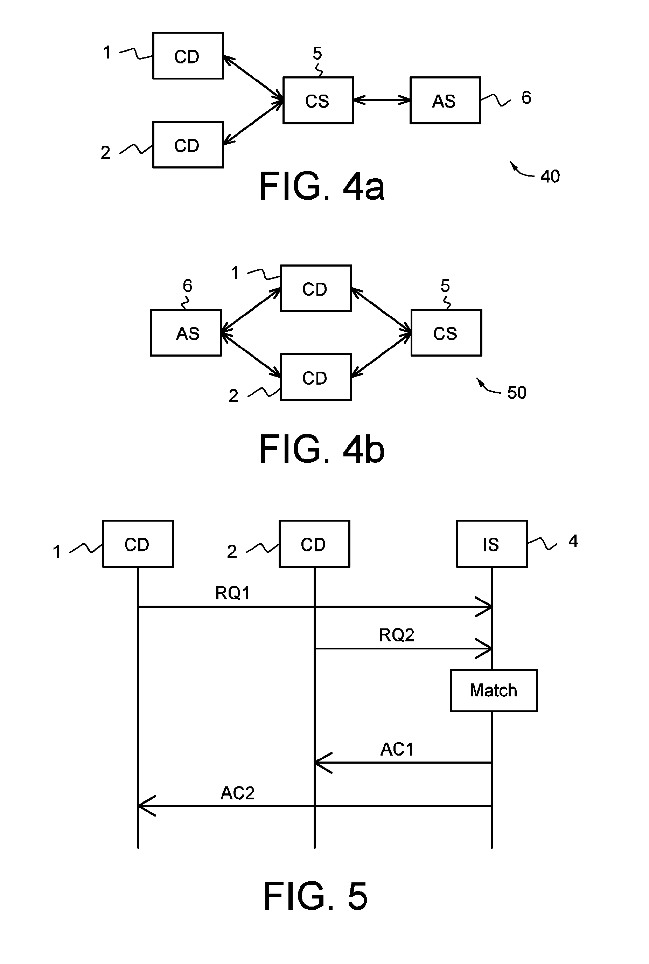

The inventive system 40 shown merely by way of non-limiting example in Fig. 4a also comprises a first client device 1 and a second client device 2. However, instead of a single, integrated server (4 in Fig. 3) the system 40 according to the present invention comprises a correlation server (CS) 5 and an application server (AS) 6, which are constituted by distinct server units. In other words, a dedicated correlation server 5 and a separate, dedicated application server 6 are used, instead of a combined server as in the Prior Art. The use of separate servers makes it very much easier and more effective to scale the system if larger numbers of clients or larger numbers of applications are used.

If the number of clients increases significantly while using only a single, or only a limited number of applications, a single application server 6 can be used in conjunction with a plurality of correlation servers 5, without the need to provide multiple copies of the application software on multiple servers. Conversely, when only a limited number of client devices but a large number of applications are used, a single correlation server 5 can be used in conjunction with a plurality of application servers 6, without the need to provide multiple copies of the correlation software on multiple servers. The system of the present invention therefore offers a greatly improved efficiency compared to the Prior Art system.

It is noted that the distinct server units are preferably constituted by servers having separate casings, which may be spaced apart and which may even be in different locations.

In the system 40 of Fig. 4a, the application server 6 is shown to communicate with the correlation server 5, which in turn communicates with the client devices 1 and 2. There is no direct communication between the application server 6 and the client devices 1 and 2.

An alternative arrangement is schematically shown in Fig. 4b. In the system 50 according to the present invention, both the correlation server 5 and the application server 6 communicated directly with the client devices. In addition to the communication links shown in Fig. 4b, the correlation server 5 and the application server 6 may also communicate directly, although this is not necessary if the client devices are arranged for forwarding messages to and from both servers.

The diagram of Fig. 5 illustrates the exchange of messages between a first client device 1, a second client device 2 and a combined or integrated server (IS) 4. In this arrangement, where no separate application server is present (see also Fig. 3), the application software is executed by the combined server 4 and/or the client devices 1 & 2.

The client devices may produce request messages RQ1 and RQ2 which constitute match requests. These messages contain a representation of an identifier, and possibly also an identification of the devices. The message RQ1 may thus be written as:

$$RQ1 = \{CI1, RE1, ... \}$$

where RQ1 is the request message produced by client device 1, CI1 is an identification of client device 1 (for example a unique device number or a telephone number), and RE1 is a representation of an identifier, preferably a sensory identifier.

It is noted that the representation of an identifier may be a string of digits or numbers representing the identifier. A bar code, as illustrated in Fig. 1, can for example be represented by a string of numbers. Similarly, a sound may be represented by its frequencies and time of occurrence, or by other parameters. In general, the representation will be a coded version of an identifier.

The (sensory) identifier can be an event, such as the tapping together of two client devices, or the detection of a symbol (such as a bar code) by the devices, and may serve as a "fingerprint" of the event: data with uniquely characterise the event. It can thus be seen that the integrated server 4 attempts to match the "fingerprints" of events detected by the client devices.

The server 4 sends a response indicating whether a match has been made, and if this is the case, the response may contain an identification of the matching client device. In the example of Fig. 5, a match has been made and the client devices 1 and 2 receive acknowledgement messages AC1 and AC2 respectively, which will preferably include the identification of the other, matching device. Alternatively, "no match" messages can be sent if no match has been made. Although the

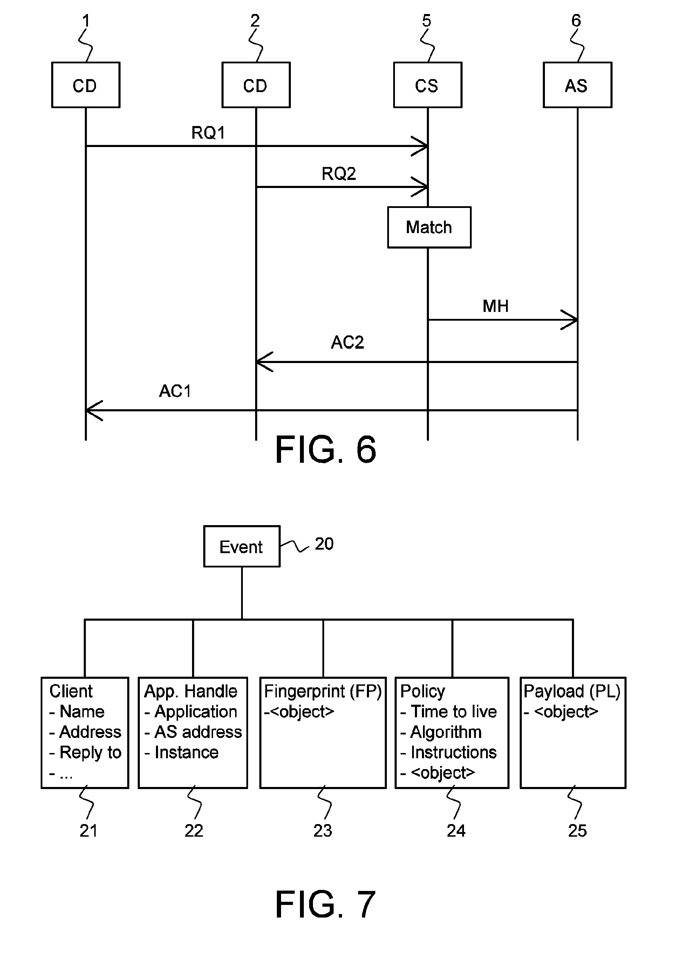

The diagram of Fig. 6 illustrates the exchange of messages between a first client device 1, a second client device 2, a (dedicated) correlation server 5 and an separate application server 6 in the system (40 in Fig. 4a) of the present invention. The correlation server 5 is preferably devoid of any application functionality, and conversely, the application server 6 is preferably devoid of any correlation functionality, so as to provide distinct servers, each server having its own, separate function.

It can be seen that in the embodiment shown the correlation server 5 sends the results MH of a successful match to the application server 6 for processing by the corresponding application, and that the application server 6 then responds to the client devices 1 and 2 by sending respective acknowledgement messages AC 1 and AC2. It can thus be seen that in this embodiment, the application server 6 produces the acknowledgement messages. The application server 6 may send these messages to the client devices directly (see Fig. 4b) or via the correlation server (see Fig. 4a, depending on the particular configuration of the system.

The acknowledgement messages may have the following structure:

$$AC1 = \{CI2, ... \}, \; AC2 = \{CI1, ...\}$$

where CI2 is the identification of client device 2 and CI1 is the identification of client device 1. Accordingly, the acknowledgement messages provide a mutual identification of the matched devices. It is noted that all messages preferably comprise a header, in addition to the information ("payload") they contain.

Those skilled in the art will appreciate that diagram 6 can be easily altered when more than one correlation server 5 and/or more than one application server 6 is used. In a particularly advantageous embodiment in which the system according to the present invention comprises at least two correlation servers 5, it further comprises at least one proxy server for routing request messages (for example RQ1) from the client devices to at least one of the at least two correlation servers. The at least one proxy server may additionally or alternatively be arranged for routing an acknowledgement message (for example AC1) from a correlation server or an application server to a client device.

The diagram of Fig. 7 illustrates a preferred data model used in the exchange of messages between the client devices, the correlation server(s) and the application server(s), for example according to Fig. 6. In this preferred embodiment, the elements of the protocol between the client devices and the correlation server are:

- Client identity (also referred to above as client identification CI):

  o "Name", location-independent identification
  o "Address": e.g. IP address plus port number
  o "Reply-to": e.g. IP address plus port number
  o other identity items.

- Application handle
  o Application identifier

  - For example "Stratego", "File", "Business card"

  o Application server address

  - For example URI or IP address of Stratego Server, plus port number

  o Instance identification

  - For example "Stratego game Barcelona 3"

- Fingerprint vector
  o (XML) object on the basis of which the "match is made"
  o Fingerprint data model
- Handling policy
  o Time-to-live (expiry of data validity)
  o Identification of matching/correlation algorithm

  - Any additional parameters / criteria

  o Additional handling instructions, e.g. security, privacy, integrity, billing, ...
- Payload
  o (XML) object that is exchanged in case of a positive match.
  o Payload data model

  - For example a field "plain text".

Additionally, "Null" behaviour may be used if the fields in the data model are not filled in:

- "Null" application server address: match is not forwarded to separate application server, but in case of a match payload A goes directly to client B and vice versa.
- "Null" fingerprint: match only on the basis of application handle and handling policies.
- "Null" time-to-live: default value, e.g. 2 seconds.
- Etcetera.

It is noted that the correlation procedure used in the present invention may have alternative embodiments. In a first embodiment, the correlation procedure is stateless: it does not take its history into account. This embodiment has the advantage of simplicity. In a second embodiment, the correlation procedure is stateful: it takes its history into account.

The present invention is based upon the insight that it is more efficient to use separate servers for the (event) correlation function and the application function, as this offers a significantly improved scalability.

It is further noted that any terms used in this document should not be construed so as to limit the scope of the present invention. In particular, the words "comprise(s)" and "comprising" are not meant to exclude any elements not specifically stated. Single (circuit) elements may be substituted with multiple (circuit) elements or with their equivalents.

It will be understood by those skilled in the art that the present invention is not limited to the embodiments illustrated above and that many modifications and additions may be made without departing from the scope of the invention as defined in the appending claims.

## Claims

1. A system (40, 50) for identifying proximate devices (1, 2) arranged for detecting a sensory identifier (ID) and transmitting request messages (RQ1, RQ2) comprising representations of the detected sensory identifier, the system comprising:

   • at least one correlation server (5) for correlating representations received from the devices (1, 2) so as to match two or more of those devices, and
   • at least one application server (6) for carrying out an application involving matching devices, wherein the at least one correlation server (5) and the at least one application server (6) are distinct servers.

2. The system according to claim 1, wherein the at least one application server (6) is arranged for communicating with the devices (1, 2) through the correlation server (5).

3. The system according to claim 1 or 2, wherein the at least one application server (6) is arranged for communicating with the devices (1, 2) directly.

4. The system according to any of the preceding claims, wherein the request messages (RQ1, RQ2) further comprise environmental information from the devices (1, 2), such as temperature, air pressure, scent and/or location, and wherein the correlation server (5) is arranged for correlating the environmental information in addition to the representations.

5. The system according to any of the preceding claims, wherein the sensory identifier (ID) comprises a sound, preferably a sound produced by tapping the devices (1, 2) together.

6. The system according to any of the preceding claims, wherein the devices (1, 2) are mobile devices.

7. The system according to any of the preceding claims, comprising at least two correlation servers (5), further comprising at least one proxy server for routing request messages (RQ1, RQ2) from the devices (1, 2) to a correlation server (5).

8. The system according to claim 7, wherein the at least one proxy server is arranged for routing an acknowledgement message (AC1) from a correlation server (5) to a device (1, 2).

9. A server for use in the system (1) according to any of the preceding claims, preferably a correlation server (5) devoid of application functionality.

10. A method of identifying proximate devices (1, 2) arranged for detecting a sensory identifier (ID) and transmitting request messages (RQ1, RQ2) comprising representations of the detected sensory identifier, the method comprising the steps of:

- • at least one correlation server (5) correlating representations received from the devices (1, 2) so as to match two or more of those devices, and
- • at least one application server (6) carrying out an application involving matching devices, wherein the at least one correlation server (5) and the at least one application server (6) are distinct servers.

11. The method according to claim 10, wherein the request messages (RQ1, RQ2) further comprise environmental information from the devices (1, 2), such as temperature, air pressure, scent and/or location, and wherein the method comprises the further step of the correlation server (5) correlating the environmental information in addition to the representations.

12. The method according to claim 10 or 11, wherein the step of correlating takes previous matches into account.

13. The method according to claim 10, 11 or 12, wherein the sensory identifier (ID) comprises a sound, preferably a sound produced by tapping the devices (1, 2) together.

14. A computer program product for carrying out the method according to any of claims 10 -13.

FIG. 1

FIG. 2

FIG. 3

FIG. 4a

FIG. 4b

FIG. 5

FIG. 6

FIG. 7

Europäisches
Patentamt

European
Patent Office

Office européen
des brevets

## EUROPEAN SEARCH REPORT

**Application Number**

EP 09 17 4329

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/014438 A1 (TNO [NL]; KONINKL KPN NV [NL]; DE VRIES FERDINAND WOUTER [NL]; VAN DEV) 29 January 2009 (2009-01-29) * pages 1-14 * ----- | 1-14 | INV. H04L29/08 |
| X | EP 2 073 515 A1 (KONINKL KPN NV [NL]; TNO [NL]) 24 June 2009 (2009-06-24) * abstract * * columns 1-7, paragraph 63 * ----- | 1-14 | |
| A | US 2009/153342 A1 (THORN OLA KARL [SE]) 18 June 2009 (2009-06-18) * abstract * * paragraphs [0001] - [0022]; figures 2,8 * ----- | 1-14 | |

|  | |
|---|---|
| | **TECHNICAL FIELDS SEARCHED (IPC)** |
| | H04L |

The present search report has been drawn up for all claims

| Place of search | Date of completion of the search | Examiner |
|---|---|---|
| Munich | 21 May 2010 | Hackl, Alexander |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 09 17 4329

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2010

| Patent document cited in search report | | Publication date | Patent family member(s) | | Publication date |
|---|---|---|---|---|---|
| WO 2009014438 | A1 | 29-01-2009 | EP | 2179574 A1 | 28-04-2010 |
| EP 2073515 | A1 | 24-06-2009 | JP | 2009188989 A | 20-08-2009 |
| | | | US | 2009176505 A1 | 09-07-2009 |
| US 2009153342 | A1 | 18-06-2009 | WO | 2009074887 A1 | 18-06-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009014438 A